# EUROPEAN PATENT APPLICATION

(11) **EP 4 404 296 A1**
(43) Date of publication of application: **24.07.2024**
(21) Application number: 22867137.6
(22) Date of filing: 08.08.2022
(51) Int. Cl.: H01M 4/36, C01G 23/00, H01M 4/62, H01M 10/052, H01M 10/0562, H01M 10/0565

(54) **COATED ACTIVE MATERIAL, ELECTRODE MATERIAL AND BATTERY**

(30) Priority: 13.09.2021 JP 2021148673
(71) Applicant: Panasonic Intellectual Property Management Co., Ltd., Osaka-shi, Osaka 571-0057 (JP)
(72) Inventor: SUGIMOTO, Yuta, Kadoma-shi, Osaka 571-0057 (JP); HASHIMOTO, Kazuya, Kadoma-shi, Osaka 571-0057 (JP)
(74) Representative: Eisenführ Speiser
(86) International application number: PCT/JP2022/030346
(87) International publication number: WO 2023/037815

(57) **Abstract**

A coated active material 130 of the present disclosure includes: an active material 110; and a coating layer 111 including a first solid electrolyte, the coating layer 111 coating at least a portion of a surface of the active material 110. The first solid electrolyte includes Li, Ti, M, and F, the M is at least one selected from the group consisting of Ca, Mg, Al, Y, and Zr, and a ratio of a specific surface area of the coated active material 130 to a specific surface area of the active material 110 is smaller than 123%.

## Description

### TECHNICAL FIELD

The present invention relates to a coated active material, an electrode material, and a battery.

### BACKGROUND ART

Non Patent Literature 1 discloses a battery including sulfide as a solid electrolyte.

### CITATION LIST

### Non Patent Literature

Non Patent Literature 1: Journal of Power Sources 159 (2006), pp. 193-199

### SUMMARY OF INVENTION

### Technical Problem

In conventional techniques, it is desired that an increase in resistance of a battery be reduced.

### Solution to Problem

The present disclosure provides a coated active material including:
an active material; and
a coating layer including a first solid electrolyte, the coating layer coating at least a portion of a surface of the active material, wherein
the first solid electrolyte includes Li, Ti, M, and F,
the M is at least one selected from the group consisting of Ca, Mg, Al, Y, and Zr, and
a ratio of a specific surface area of the coated active material to a specific surface area of the active material is smaller than 123%.

### Advantageous Effects of Invention

According to the present disclosure, an increase in the resistance of a battery can be reduced.

### BRIEF DESCRIPTION OF DRAWINGS

FIG. 1 is a cross-sectional view schematically showing a configuration of a coated active material of Embodiment 1.
FIG. 2 is a cross-sectional view schematically showing a configuration of a coated active material of a modification.
FIG. 3 is a cross-sectional view schematically showing a configuration of an electrode material of Embodiment 2.
FIG. 4 is a cross-sectional view schematically showing a configuration of a battery of Embodiment 3.

### DESCRIPTION OF EMBODIMENTS

### (Findings on which the present disclosure is based)

For example, in the case that an active material and a solid electrolyte are in contact with each other, oxidative decomposition of the solid electrolyte can occur during charging of a battery. This tendency is notable when the solid electrolyte is one having a poor anti-oxidative stability, such as a sulfide solid electrolyte. To solve this disadvantage, a surface of the active material is coated with a sheath material, such as a halide solid electrolyte, having a high anti-oxidative stability.

The present inventors found that even when including sheath materials having the same composition, batteries have different properties, especially different resistances. The present inventors also found a correlation between a variation in the specific surface area of an active material and the resistance of a battery, and have conceived the present disclosure.

### (Summary of one aspect according to the present disclosure)

A coated active material according to a first aspect of the present disclosure includes:
an active material; and
a coating layer including a first solid electrolyte, the coating layer coating at least a portion of a surface of the active material, wherein
the first solid electrolyte includes Li, Ti, M, and F,
the M is at least one selected from the group consisting of Ca, Mg, Al, Y, and Zr, and
a ratio of a specific surface area of the coated active material to a specific surface area of the active material is smaller than 123%.

The ratio of the specific surface area of the coated active material to the specific surface area of the active material in the above range means that the active material is uniformly coated with the coating layer. A less uneven, uniform coating is advantageous in that an increase in resistance of a battery is reduced. In particular, an increase in resistance can be reduced, the increase accompanying charge-discharge cycling.

According to a second aspect of the present disclosure, for example, in the coated active material according to the first aspect, the active material may be a positive electrode active material. Applying the technique of the present disclosure to a positive electrode active material makes it possible to include a solid electrolyte poor in oxidation resistance but high in ionic conductivity in a positive electrode.

According to a third aspect of the present disclosure, for example, in the coated active material according to the first or second aspect, the ratio may be 105% or less. Such a structural feature can make it possible to more effectively reduce an increase in resistance of a battery.

According to a fourth aspect of the present disclosure, for example, in the coated active material according to any one of the first to third aspects, the ratio may be 89% or less. Such a structural feature can make it possible to more effectively reduce an increase in resistance of a battery.

According to a fifth aspect of the present disclosure, for example, in the coated active material according to any one of the first to fourth aspects, the M may be at least one selected from the group consisting of Al and Y When the M includes Al and/or Y, the halide solid electrolyte has a high ionic conductivity.

According to a sixth aspect of the present disclosure, for example, in the coated active material according to any one of the first to fifth aspects, the M may be Al. When the M includes Al, the halide solid electrolyte has a high ionic conductivity.

According to a seventh aspect of the present disclosure, for example, in the coated active material according to any one of the first to sixth aspects, a ratio of an amount of substance of the Li to a sum of an amount of substance of the Ti and an amount of substance of the M may be 1.7 or more and 4.2 or less. Such a structural feature makes it possible to further increase the ionic conductivity of the first solid electrolyte.

According to an eighth aspect of the present disclosure, for example, in the coated active material according to any one of the first to seventh aspects, the first solid electrolyte may be represented by the following composition formula (2), where 0 < x < 1 and 0 < b ≤ 1.5 may be satisfied. The halide solid electrolyte having such composition has a high ionic conductivity.

Li_{6-(4-x)b}(Ti₁₋ₓMₓ)_{b}F₆ Formula (2)

According to a ninth aspect of the present disclosure, for example, in the coated active material according to the eighth aspect, 0.1 ≤ x ≤ 0.9 may be satisfied. Such a structural feature makes it possible to further increase the ionic conductivity of the halide solid electrolyte.

According to a tenth aspect of the present disclosure, for example, in the coated active material according to the eighth or ninth aspect, 0.8 ≤ b ≤ 1.2 may be satisfied. Such a structural feature makes it possible to further increase the ionic conductivity of the halide solid electrolyte.

An electrode material according to an eleventh aspect includes:
the coated active material according to any one of the first to tenth aspects; and
a second solid electrolyte.

The electrode material of the present disclosure is suitable for reducing an increase in resistance of a battery.

According to a twelfth aspect of the present disclosure, for example, in the electrode material according to the eleventh aspect, the second solid electrolyte may include a sulfide solid electrolyte. In the case that a sulfide solid electrolyte is included as the second solid electrolyte in a battery, an increased effect is achieved by applying the technique of the present disclosure.

A battery according to a thirteenth aspect of the present disclosure includes:
a positive electrode including the electrode material according to the eleventh or twelfth aspect;
a negative electrode; and
an electrolyte layer disposed between the positive electrode and the negative electrode.

According to the present disclosure, an increase in resistance of a battery can be reduced and a battery excellent in durability can be provided.

Embodiments of the present disclosure will be described hereinafter with reference to the drawings. The present disclosure is not limited to the following embodiments.

### (Embodiment 1)

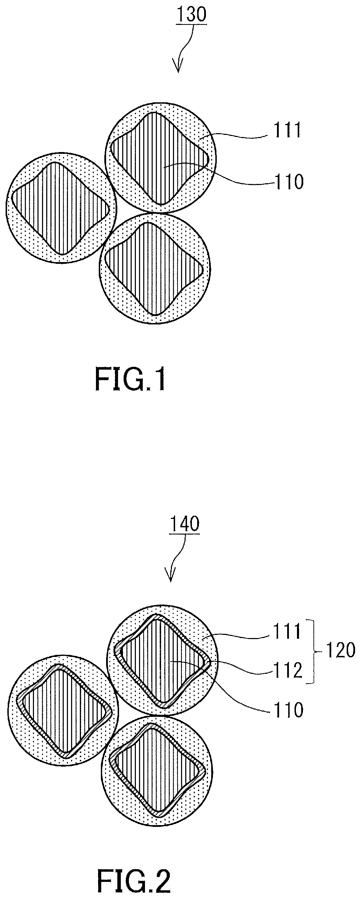

FIG. 1 is a cross-sectional view schematically showing a configuration of a coated active material 130 of Embodiment 1. The coated active material 130 includes an active material 110 and a coating layer 111. The shape of the active material 110 is, for example, the shape of a particle. The coating layer 111 coats at least a portion of a surface of the active material 110.

The coating layer 111 is a layer including the first solid electrolyte. The coating layer 111 is on the surface of the active material 110. The first solid electrolyte includes Li, Ti, M, and F. The M is at least one selected from the group consisting of Ca, Mg, Al, Y, and Zr.

The first solid electrolyte can be a halogen-containing solid electrolyte. A halogen-containing solid electrolyte is often called a halide solid electrolyte. A halide solid electrolyte is excellent in oxidation resistance. In particular, a F-containing halide solid electrolyte is excellent in oxidation resistance because of the high electronegativity of F. Thus, by coating the active material 110 with the first solid electrolyte, oxidation of another solid electrolyte in contact with the active material 110 can be suppressed. Consequently, an increase in resistance of a battery can be reduced.

In the coated active material 130, a ratio of a specific surface area of the coated active material 130 to a specific surface area of the active material 110 is, in percentage, smaller than 123%. The ratio of the specific surface area of the coated active material 130 to the specific surface area of the active material 110 in the above range means that the active material 110 is uniformly coated with the coating layer 111. A less uneven, uniform coating is advantageous in that an increase in resistance of a battery is reduced. In particular, an increase in resistance can be reduced, the increase accompanying charge-discharge cycling.

The lower limit of the ratio of the specific surface area of the coated active material to the specific surface area of the active material is not limited to a particular value. The lower limit of the ratio of the specific surface area of the coated active material to the specific surface area of the active material is, for example, 45%.

In the present embodiment, the ratio of the specific surface area of the coated active material 130 to the specific surface area of the active material 110 may be 105% or less, or 89% or less. In this case, an increase in resistance of a battery can be more effectively reduced.

The specific surface area can be measured by the following method. First, an adsorption isotherm is measured using an adsorbed gas amount measurement apparatus. The specific surface area (unit: cm²/g) is calculated from the adsorption isotherm by BET analysis.

Herein, the specific surface area of the active material 110 refers to a specific surface area of a group of particles of the active material 110. Likewise, the specific surface area of the coated active material 130 refers to a specific surface area of a group of particles of the coated active material 130.

The specific surface area of the active material 110 can be measured by selectively removing the coating layer 111 from the coated active material 130 using an inorganic solvent or an organic solvent. For example, in the case that the first solid electrolyte included in the coating layer 111 is a halide solid electrolyte, the coating layer 111 can be selectively removed by washing the coated active material 130 using an solvent such as water or ethanol.

In the present embodiment, the degree of an increase in resistance of a battery is represented by a measure "resistance increase rate".

The resistance increase rate can be measured by the following method. After completion of a battery, charge-discharge processing is carried out. Then, the battery is charged to an appropriate charging voltage approximately between 3 V and 4 V. After that, the battery is discharged at an appropriate rate approximately between 2C to 2.5C, and is measured for the voltage one second later. A battery resistance is determined from a straight line between two points, which are an OCV (point 1) before discharging and a voltage (point 2) after one second of discharging, on an I-V plot. The resistance value determined is employed as a pre-endurance resistance value. Subsequently, the battery is put in a high-temperature chamber set at 60°C, and charging and discharging are repeated 50 cycles at 1C. Then, the temperature of the constant-temperature chamber was changed back to 25°C, and the battery is measured for its resistance value in the above manner. The value is employed as a post-endurance resistance value. The resistance increase rate is determined as a ratio of the post-endurance resistance value to the pre-endurance resistance value.

The coating layer 111 may coat the entire surface of the active material 110.

The coating layer 111 may coat only a portion of the surface of the active material 110. In this case, the particles of the active material 110 are in direct contact with each other on their portions not coated with the coating layer 111, and therefore the electron conductivity between the particles of the active material 110 improves. This allows a battery to operate at a high power.

Next, the active material 110 and the coating layer 111 will be described in details.

### <<Active material 110>>

The active material 110 is, for example, a positive electrode active material. Applying the technique of the present disclosure to a positive electrode active material makes it possible for a positive electrode to include a solid electrolyte poor in oxidation resistance but high in ionic conductivity. Examples of such a solid electrolyte include a sulfide solid electrolyte and a halide solid electrolyte.

The positive electrode active material includes a material having properties of occluding and releasing metal ions (e.g., lithium ions). A lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like can be used as the positive electrode active material. In particular, when a lithium-containing transition metal oxide is used as the positive electrode active material, it is possible to reduce a battery manufacturing cost and increase the average discharge voltage. Examples of the lithium-containing transition metal oxide include Li(NiCoAl)O₂, Li(NiCoMn)O₂, and LiCoO₂.

The positive electrode active material may include Ni, Co, and Al. The positive electrode active material may be lithium nickel cobalt aluminum oxide. For example, the positive electrode active material may be Li(NiCoAl)O₂. Such a structural feature can further improve the energy density and the charge and discharge efficiency of a battery.

The active material 110 has, for example, the shape of a particle. The shape of the particle of the active material 110 is not limited to a particular one. The shape of the particle of the active material 110 can be the shape of a sphere, an ellipsoid, a flake, or a fiber.

A median size of the active material 110 may be 0.1 µm or more and 100 µm or less. In the case that the median size of the active material 110 is 0.1 µm or more, the coated active material 130 and another solid electrolyte are likely to be in a favorable dispersion state. This improves the charge and discharge characteristics of a battery. In the case that the median size of the active material 110 is 100 µm or less, the diffusion rate of lithium in the active material 110 is sufficiently ensured. This allows a battery to operate at a high power.

The term "median size" herein means a particle size at 50% in a volume-based cumulative particle size distribution. The volume-based particle size distribution is measured, for example, using a laser diffraction measurement apparatus or an image analyzer.

### <<Coating layer 111>>

The coating layer 111 includes the first solid electrolyte. The first solid electrolyte has ion conductivity. The ion conductivity is typically lithium-ion conductivity. The coating layer 111 may include the first solid electrolyte as its main component, or may include only the first solid electrolyte. The term "main component" refers to a component whose content is highest on a mass basis. The phrase "including only the first solid electrolyte" means that, except inevitable impurities, no materials other than the first solid electrolyte are intentionally added. For example, the inevitable impurities include a raw material of the first solid electrolyte, a by-product generated in production of the first solid electrolyte, and the like. A ratio of a mass of the inevitable impurities in a total mass of the first coating layer 111 may be 5% or less, 3% or less, 1% or less, or 0.5% or less.

The first solid electrolyte is a material including Li, Ti, M, and X. The M is as described above. The X is at least one selected from the group consisting of F, Cl, Br, and I. Such a material is excellent in ion conductivity and oxidation resistance. Therefore, the coated active material 130 including the coating layer 111 including the first solid electrolyte improves the charge and discharge efficiency of a battery and the thermal stability thereof.

In the case that the X is F, the oxidation resistance of the first solid electrolyte can be improved further.

The halide solid electrolyte as the first solid electrolyte is represented, for example, by the following composition formula (1). In the composition formula (1), α, β, γ, and δ are each a value greater than 0.

Li_{α}Ti_{β}M_{γ}X_{δ} Formula (1)

The halide solid electrolyte represented by the composition formula (1) has a high ionic conductivity, compared to a halide solid electrolyte, such as Lil, consisting only of Li and a halogen element. Therefore, by including the halide solid electrolyte represented by the composition formula (1) in a battery, the charge and discharge efficiency of the battery can be improved.

The M may be at least one selected from the group consisting of Al and Y That is, the halide solid electrolyte may include, as a metal element, at least one selected from the group consisting of Al and Y The M may be Al. In the case that the M includes Al and/or Y, the halide solid electrolyte has a high ionic conductivity.

The halide solid electrolyte may substantially consist of Li, Ti, Al, and the X. Here, the sentence "the halide solid electrolyte substantially consists of Li, Ti, Al, and the X" means that a molar ratio (i.e., a molar fraction) of a sum of amounts of substance of Li, Ti, Al, and the X to a sum of amounts of substance of all elements in the halide solid electrolyte is 90% or more. In one example, the molar ratio (i.e., the molar fraction) may be 95% or more. The halide solid electrolyte may consist only of Li, Ti, Al, and the X.

To further increase the ionic conductivity of the first solid electrolyte, a ratio of an amount of substance of the Li to a sum of an amount of substance of the Ti and an amount of substance of the M may be 1.7 or more and 4.2 or less in the halide solid electrolyte.

The halide solid electrolyte may be represented by the following composition formula (2).

Li_{6-(4-x)b}(Ti₁₋ₓMₓ)_{b}F₆ Formula (2)

In the composition formula (2), 0 < x < 1 and 0 < b ≤ 1.5 are satisfied. The halide solid electrolyte having such composition has a high ionic conductivity.

To further increase the ionic conductivity of the halide solid electrolyte, the M may be Al.

To further increase the ionic conductivity of the halide solid electrolyte, 0.1 ≤ x ≤ 0.9 may be satisfied in the composition formula (2).

In the composition formula (2), 0.1 ≤ x ≤ 0.7 may be satisfied.

The upper limit and the lower limit of the range of the x in the composition formula (2) can be any pair of numerical values selected from 0.1, 0.3, 0.4, 0.5, 0.6, 0.67, 0.7, 0.8, and 0.9.

To increase the ionic conductivity of the halide solid electrolyte, 0.8 ≤ b ≤ 1.2 may be satisfied in the composition formula (2).

The upper limit and the lower limit of the range of the b in the composition formula (2) can be any pair of numerical values selected from 0.8, 0.9, 0.94, 1.0, 1.06, 1.1, and 1.2.

The halide solid electrolyte may be crystalline or amorphous.

The shape of the halide solid electrolyte is not limited to a particular one. The shape of the halide solid electrolyte is, for example, the shape of a needle, a sphere, or an ellipsoid. The shape of the halide solid electrolyte may be the shape of a particle.

In the case that the shape of the halide solid electrolyte is, for example, the shape of a particle (for example, the shape of a sphere), the median size of the halide solid electrolyte may be 0.01 µm or more and 100 µm or less.

The thickness of the coating layer 111 is, for example, 1 nm or more and 500 nm or less. When the thickness of the coating layer 111 is appropriately adjusted, contact between the active material 110 and another solid electrolyte can be sufficiently reduced. The thickness of the coating layer 111 can be determined by making the coated active material 130 thin by a technique such as ion milling and observing a cross-section of the coated active material 130 using a transmission electron microscope. The average of thicknesses measured at two or more random positions (e.g., five points) can be defined as the thickness of the coating layer 111.

The halide solid electrolyte may be a sulfur-free solid electrolyte. In this case, generation of a sulfur-containing gas such as a hydrogen sulfide gas from the solid electrolyte can be avoided. A sulfur-free solid electrolyte refers to a solid electrolyte represented by a composition formula including no sulfur element. Therefore, a solid electrolyte including a very small amount of sulfur, such as a solid electrolyte in which the sulfur content is 0.1 mass% or less is classified as a sulfur-free solid electrolyte. The halide solid electrolyte may further include oxygen as an anion other than a halogen element.

### <<Method for manufacturing halide solid electrolyte>>

The halide solid electrolyte can be manufactured by the following method.

A plurality of raw material powders are prepared according to a target composition and mixed. The raw material powder can be a halide. The halide may be a compound consisting of a plurality of elements including a halogen element.

For example, in the case that the target composition is Li_{2.7}Ti_{0.3}Al_{0.7}F₆, LiF, TiF₄, and AlF₃ are prepared as the raw material powders in a molar ratio of approximately 2.7:0.3:0.7 and are mixed. The element type of the "M" and "X" in the composition formula (1) can be determined by appropriately selecting the types of the raw material powders here. The values of "α", "β", "γ", and "δ" in the composition formula (1) can be adjusted by adjusting the types of the raw material powders, a blending ratio between the raw material powders, and a synthesis process. The raw material powders may be mixed at a molar ratio adjusted in advance so as to negate a composition change that can occur in the synthesis process.

The raw material powders may be mixed using a mixing machine such as a planetary ball mill. The raw material powders are caused to react by mechanochemical milling to obtain a reaction product. The reaction product may be fired in vacuum or an inert atmosphere. Alternatively, a mixture of the raw material powders may be fired in vacuum or an inert atmosphere to obtain a reaction product. The firing is performed, for example, at 100°C or higher and 400°C or lower for one hour or longer. To suppress a composition change that can be induced by the firing, the raw material powders may be fired in an airtight container such as a quartz tube. The halide solid electrolyte is obtained through these steps.

### <<Method for manufacturing coated active material 130>>

The coated active material 130 can be manufactured by the following method.

A powder of the active material 110 and a powder of the first solid electrolyte are mixed at an appropriate ratio to obtain a mixture. The mixture is subjected to milling to provide mechanical energy to the mixture. A mixing machine such as a ball mill can be used for the milling. The milling may be performed in a dry and inert atmosphere to suppress oxidation of the materials.

The coated active material 130 may be manufactured by a dry composite particle forming method. Processing by the dry composite particle forming method includes providing mechanical energy generated by at least one selected from the group consisting of impact, compression, and shearing to the active material 110 and the first solid electrolyte. The active material 110 and the first solid electrolyte are mixed at an appropriate ratio.

The apparatus used in manufacturing of the coated active material 130 is not limited to a particular one, and can be an apparatus capable of providing mechanical energy generated by impact, compression, and shearing to the mixture of the active material 110 and the first solid electrolyte. Example of the apparatus capable of providing such mechanical energy include a compression shear type processing apparatus (composite particle forming machine) such as a ball mill, "Mechanofusion" (manufactured by HOSOKAWA MICRON CORPORATION), or "Nobilta" (manufactured by HOSOKAWA MICRON CORPORATION).

Mechanofusion is a composite particle forming machine to which a dry mechanical composite forming technique in which high mechanical energy is applied to a plurality of different raw material powders is applied. Mechanofusion provides mechanical energy generated by compression, shearing, and friction to raw material powders added between a rotating vessel and a press head. Composite particle formation is thereby performed.

Nobilta is a composite particle forming machine to which a dry mechanical composite forming technique developed from a composite particle forming technique is applied for forming a composite from raw materials being nanoparticles. Nobilta manufactures composite particles by providing mechanical energy generated by impact, compression, and shearing to a plurality of raw material powders.

In a horizontal cylindrical mixing vessel of Nobilta, a rotor disposed to leave a given amount of clearance between the rotor and the inner wall of the mixing vessel rotates at high speed to repeat a process of forcing raw material powders to go through the clearance. Through this processing, the force of impact, compression, and shearing acts on the mixture, and thereby composite particles of the active material 110 and the first solid electrolyte can be produced. The thickness of the coating layer 111, the specific surface area of the coated active material 130, and the like can be controlled by adjusting conditions such as the rotation speed of the rotor, the processing time, and the amounts of the raw material powders added.

However, the processing using the above apparatuses is not essential. The coated active material 130 may be manufactured by mixing the active material 110 and the first solid electrolyte using a mortar, a mixer, or the like. The first solid electrolyte may be deposited on the surface of the active material 110 by a method such as spraying, spray dry coating, electrodeposition, immersion, or mechanical mixing using a disperser.

### (Modification)

FIG. 2 is a cross-sectional view schematically showing a configuration of a coated active material 140 according to a modification. The coated active material 140 includes the active material 110 and a coating layer 120. In the present modification, the coating layer 120 includes a first coating layer 111 and the second coating layer 112. The first coating layer 111 is a layer including the first solid electrolyte. The second coating layer 112 is a layer including an underlayer material. The first coating layer 111 is positioned on the outer side of the second coating layer 112. Such a structural feature can further decrease the resistance of a battery.

The first coating layer 111 is the coating layer 111 described in Embodiment 1.

The second coating layer 112 is positioned between the first coating layer 111 and the active material 110. In the present modification, the second coating layer 112 is in direct contact with the active material 110. The second coating layer 112 may include, as the underlayer material, a material having a low electron conductivity, such as an oxide material or an oxide solid electrolyte.

A ratio of a specific surface area of the coated active material 140 to the specific surface area of the active material 110 is smaller than 123% also in the present modification.

Examples of the oxide material include SiO₂, Al₂O₃, TiO₂, B₂O₃, Nb₂O₅, WO₃, and ZrO₂. Examples of the oxide solid electrolyte include Li-Nb-O compounds such as LiNbOs, Li-B-O compounds such as LiBO₂ and Li₃BO₃, Li-Al-O compounds such as LiAlO₂, Li-Si-O compounds such as Li₄SiO₄, Li-Ti-O compounds such as Li₂SO₄ and Li₄Ti₅O₁₂, Li-Zr-O compounds such as Li₂ZrO₃, Li-Mo-O compounds such as Li₂MoO₃, Li-V-O compounds such as LiV₂O₅, and Li-W-O compounds such as Li₂WO₄. The underlayer material may be one selected from these, or may be a mixture of two or more of these.

The underlayer material may be a lithium-ion-conductive solid electrolyte. The underlayer material is typically a lithium-ion-conductive oxide solid electrolyte. Oxide solid electrolytes have high ionic conductivity and excellent high-potential stability. The charge and discharge efficiency of a battery can be improved by using an oxide solid electrolyte as the underlayer material.

The underlayer material may be a material including Nb. The underlayer material typically includes lithium niobate (LiNbOs). Such a structural feature can improve the charge and discharge efficiency of a battery. The above-described materials can be used as the oxide solid electrolyte being the underlayer material.

In one example, the ionic conductivity of the halide solid electrolyte included in the first coating layer 111 is higher than the ionic conductivity of the underlayer material included in the second coating layer 112. Such a structural feature can further suppress oxidation of another solid electrolyte without sacrificing the ionic conductivity.

The thickness of the first coating layer 111 is, for example, 1 nm or more and 500 nm or less. The thickness of the second coating layer 112 is, for example, 1 nm or more and 500 nm or less. When the thicknesses of the first coating layer 111 and the second coating layer 112 are appropriately adjusted, contact between the active material 110 and another solid electrolyte can be sufficiently reduced. The thicknesses of the layers can be determined by the above-described method.

### <<Method for manufacturing coated active material 140>>

The coated active material 140 can be manufactured by the following method.

First, the second coating layer 112 is formed on the surface of the active material 110. The method for manufacturing the second coating layer 112 is not limited to a particular one. Examples of the method for manufacturing the second coating layer 112 include a liquid phase coating method and a gas phase coating method.

For example, according to the liquid phase coating method, a precursor solution of the underlayer material is applied to the surface of the active material 110. When the second coating layer 112 including LiNbOs is to be formed, the precursor solution can be a solution mixture (sol solution) of a solvent, a lithium alkoxide, and a niobium alkoxide. The lithium alkoxide is, for example, lithium ethoxide. The niobium alkoxide is, for example, niobium ethoxide. The solvent is, for example, an alcohol such as ethanol. The amount of the lithium alkoxide and that of the niobium alkoxide are adjusted according to a target composition of the second coating layer 112. Water may be added to the precursor solution, if needed. The precursor solution may be acidic or alkaline.

The method for applying the precursor solution to the surface of the active material 110 is not limited to a particular one. For example, a tumbling fluidized bed granulation coating apparatus can be used to apply the precursor solution to the surface of the active material 110. A tumbling fluidized bed granulation coating apparatus can spray the precursor solution on the active material 110 to apply the precursor solution to the surface of the active material 110 while rolling and fluidizing the active material 110. In this manner, a precursor coating is formed on the surface of the active material 110. After that, the active material 110 coated with the precursor coating is subjected to a thermal treatment. Gelation of the precursor coating progresses by the thermal treatment, and thus the second coating layer 112 is formed.

Examples of the gas phase coating method include pulsed laser deposition (PLD), vacuum deposition, sputtering, thermal chemical vapor deposition (CVD), and plasma-enhanced chemical vapor deposition. For example, in the PLD, an ion-conducting material as a target is irradiated with a high-energy pulsed laser (e.g., a KrF excimer laser with a wavelength of 248 nm) to deposit the sublimed ion-conducting material on the surface of the active material 110. When the second coating layer 112 being LiNbOs is to be formed, densely sintered LiNbOs is used as the target.

However, the method for forming the second coating layer 112 is not limited to the above examples. The second coating layer 112 may be formed by a method such as spraying, spray dry coating, electrodeposition, immersion, or mechanical mixing using a disperser.

After the second coating layer 112 is formed, the first coating layer 111 is formed by the method described in Embodiment 1. The coated active material 140 can thereby be obtained.

### (Embodiment 2)

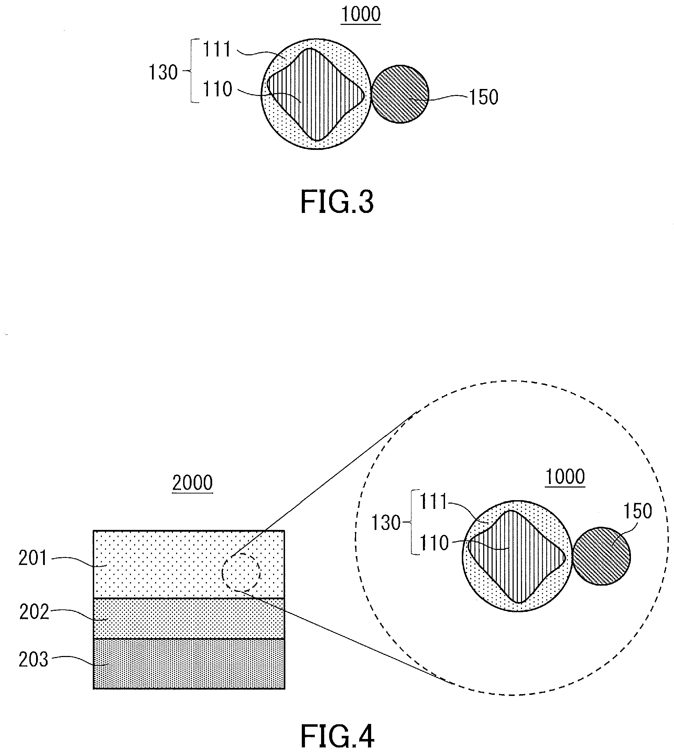

FIG. 3 is a cross-sectional view schematically showing a configuration of an electrode material 1000 of Embodiment 2.

The electrode material 1000 includes the coated active material 130 of Embodiment 1 and a second solid electrolyte 150. The electrode material 1000 can be a positive electrode material. The coated active material 140 of the modification can be used instead of the coated active material 130 or along with the coated active material 130. The electrode material 1000 of the present embodiment is suitable for reducing an increase in resistance of a battery.

The active material 110 of the coated active material 130 is separated from the second solid electrolyte 150 by the coating layer 111. The active material 110 is not necessarily in direct contact with the second solid electrolyte 150. This is because the coating layer 111 is ionically conductive.

The second solid electrolyte 150 may include at least one selected from the group consisting of a halide solid electrolyte, a sulfide solid electrolyte, an oxide solid electrolyte, a polymer solid electrolyte, and a complex hydride solid electrolyte.

Examples of the halide solid electrolyte include the materials described in Embodiment 1 as the first solid electrolyte. That is, the composition of the second solid electrolyte 150 may be the same as or different from that of the first solid electrolyte.

The oxide solid electrolyte is a solid electrolyte including oxygen. As an anion other than oxygen, the oxide solid electrolyte may further include an anion that is neither a sulfur element nor a halogen element.

As the oxide solid electrolyte can be used, for example, a NASICON solid electrolyte typified by LiTi₂(PO₄)₃ and element-substituted substances thereof; a (LaLi)TiO₃-based perovskite solid electrolyte; a LISICON solid electrolyte typified by Li₁₄ZnGe₄O₁₆, Li₄SiO₄, LiGeO₄ and element-substituted substances thereof; a garnet solid electrolyte typified by Li₇La₃Zr₂O₁₂ and element-substituted substances thereof; Li₃PO₄ and N-substituted substances thereof; or a glass or glass ceramic including a base material that includes a Li-B-O compound such as LiBO₂ or Li₃BO₃ and to which a material such as Li₂SO₄, Li₂CO₃, or the like has been added.

For example, a compound of a polymer compound and a lithium salt can be used as the polymer solid electrolyte. The polymer compound may have an ethylene oxide structure. The polymer compound having an ethylene oxide structure can contain a large amount of a lithium salt. Therefore, the ionic conductivity can be increased further. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), LiC(SO₂CF₃)₃, or the like. One lithium salt selected from these may be used alone, or a mixture of two or more lithium salts selected from these may be used.

For example, LiBH₄-LiI or LiBH₄-P₂S₅ can be used as the complex hydride solid electrolyte.

The second solid electrolyte 150 may include Li and S. In other words, the second solid electrolyte 150 may include a sulfide solid electrolyte. The sulfide solid electrolyte has a high ionic conductivity and can improve the charge and discharge efficiency of a battery. However, the sulfide solid electrolyte can be poor in oxidation resistance. In the case that a battery includes a sulfide solid electrolyte as the second solid electrolyte 150, an increased effect is achieved by applying the technique of the present disclosure.

For example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used as the sulfide solid electrolyte. LiX, Li₂O, MO_{q}, LiₚMO_{q}, or the like may be added thereto. Here, the X in "LiX" is at least one selected from the group consisting of F, Cl, Br, and I. The element M in "MO_{q}" and "LiₚMO_{q}" is at least one selected from the group consisting of P, Si, Ge, B, Al, Ga, In, Fe, and Zn. The symbols p and q in "MO_{q}" and "LiₚMO_{q}" are each an independent natural number.

The second solid electrolyte 150 may include two or more materials selected from the materials mentioned as the solid electrolyte. The second solid electrolyte 150 may include, for example, the halide solid electrolyte and the sulfide solid electrolyte.

The lithium ion conductivity of the second solid electrolyte 150 may be higher than that of the first solid electrolyte.

The second solid electrolyte 150 may include inevitable impurities such as a starting material used for synthesis of the solid electrolyte, a by-product, a decomposition product, and the like. This is applicable to the first solid electrolyte.

The shape of the second solid electrolyte 150 is not limited to a particular one, and may be the shape of a needle, a sphere, an ellipsoid, or the like. The second solid electrolyte 150 may have the shape of a particle.

When the second solid electrolyte 150 has the shape of a particle (e.g., a sphere), the median size of the second solid electrolyte 150 may be 100 µm or less. When the median size of the second solid electrolyte 150 is 100 µm or less, the coated active material 130 and the second solid electrolyte 150 are likely to be in a favorable dispersion state in the electrode material 1000. This improves the charge and discharge characteristics of a battery. The median size of the second solid electrolyte 150 may be 10 µm or less.

The median size of the second solid electrolyte 150 may be smaller than that of the coated active material 130. In this case, the second solid electrolyte 150 and the coated active material 130 can be in a more favorable dispersion state in the electrode material 1000.

The median size of the coated active material 130 may be 0.1 µm or more and 100 µm or less. In the case that the median size of the coated active material 130 is 0.1 µm or more, the coated active material 130 and the second solid electrolyte 150 are likely to be in a favorable dispersion state in the electrode material 1000. This improves the charge and discharge characteristics of a battery. In the case that the median size of the coated active material 130 is 100 µm or less, the diffusion rate of lithium in the coated active material 130 is sufficiently ensured. This allows a battery to operate at a high power.

The median size of the coated active material 130 may be greater than the median size of the second solid electrolyte 150. In this case, the coated active material 130 and the second solid electrolyte 150 can be in a favorable dispersion state.

As shown in FIG. 3, the second solid electrolyte 150 and the coated active material 130 may be in contact with each other in the electrode material 1000. In this case, the coating layer 111 and the second solid electrolyte 150 are in contact with each other.

The electrode material 1000 may include a plurality of particles of the second solid electrolyte 150 and a plurality of particles of the coated active material 130. That is, the electrode material 1000 can be a mixture of a powder of the coated active material 130 and a powder of the second solid electrolyte 150.

The amount of the second solid electrolyte 150 and the amount of the coated active material 130 may be the same or may be different in the electrode material 1000.

### «Additional materials»

The electrode material 1000 may include a binder to improve the adhesion between the particles. The binder is used, for example, to improve the binding properties of the materials of an electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylene sulfide, hexafluoropolypropylene, styrene-butadiene rubber, carboxymethyl cellulose, and ethyl cellulose. Moreover, a copolymer of two or more monomers selected from the group consisting of tetrafluoroethylene, hexafluoroethylene, hexafluoropropylene, perfluoroalkylvinyl ether, vinylidene fluoride, chlorotrifluoroethylene, ethylene, propylene, butadiene, styrene, pentafluoropropylene, fluoromethyl vinyl ether, acrylic acid ester, acrylic acid, and hexadiene can be used. One selected from these may be used alone, or two or more selected from these may be used in combination.

The binder may be an elastomer for its excellent binding properties. Elastomers are polymers having rubber elasticity. The elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). One selected from these may be used alone, or two or more selected from these may be used in combination.

The electrode material 1000 may include a conductive additive to increase the electronic conductivity. As the conductive additive can be used, for example, graphites such as natural graphite and artificial graphite; carbon blacks such as acetylene black and ketjen black; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as polyaniline, polypyrrole, and polythiophene. Using a conductive carbon additive can seek cost reduction.

The above conductive additive may be included in the coating layer 111.

### <<Method for manufacturing electrode material>>

The electrode material 1000 is obtained by mixing a powder of the coated active material 130 and a powder of the second solid electrolyte 150. The method for mixing the coated active material 130 and the second solid electrolyte 150 is not limited to a particular one. The coated active material 130 and the second solid electrolyte 150 may be mixed using a tool such as a mortar or using a mixing machine such as a ball mill.

### (Embodiment 3)

Embodiment 3 will be hereinafter described. The description common to Embodiments 1 and 2 is omitted as appropriate.

FIG. 4 is a cross-sectional view schematically showing a configuration of a battery 2000 of Embodiment 3. The battery 2000 includes a positive electrode 201, a separator layer 202, and a negative electrode 203. The separator layer 202 is disposed between the positive electrode 201 and the negative electrode 203. The positive electrode 201 includes the electrode material 1000 described in Embodiment 2. Such structural features make it possible to reduce an increase in resistance of the battery 2000 and provide a battery excellent in durability.

The thicknesses of the positive electrode 201 and the negative electrode 203 may each be 10 µm or more and 500 µm or less. When the thicknesses of the positive electrode 201 and the negative electrode 203 are each 10 µm or more, a sufficient energy density of the battery can be ensured. When the thicknesses of the positive electrode 201 and the negative electrode 203 is 500 µm or less, the battery 2000 can operate at a high power.

The separator layer 202 is an electrolyte layer including an electrolyte material. The separator layer 202 may include at least one solid electrolyte selected from the group consisting of a sulfide solid electrolyte, an oxide solid electrolyte, a halide solid electrolyte, a polymer solid electrolyte, and a complex hydride solid electrolyte. The details of each solid electrolyte are as described in Embodiments 1 and 2.

The separator layer 202 may have a thickness of 1 µm or more and 300 µm or less. When the separator layer 202 has a thickness of 1 µm or more, the positive electrode 201 and the negative electrode 203 can be more reliably separated. When the separator 202 has a thickness of 300 µm or less, the battery 2000 can operate at a high power.

The negative electrode 203 includes a material having properties of occluding and releasing metal ions (e.g., lithium ions) as a negative electrode active material.

A metal material, a carbon material, an oxide, a nitride, a tin compound, a silicon compound, or the like can be used as the negative electrode active material. The metal material may be an elemental metal. Alternatively, the metal material may be an alloy. Examples of the metal material include lithium metal and a lithium alloy. Examples of the carbon material include natural graphite, coke, semi-graphitized carbon, carbon fibers, spherical carbon, artificial graphite, and amorphous carbon. In terms of the capacity density, silicon (Si), tin (Sn), a silicon compound, a tin compound, or the like can be suitably used.

The median size of a particle of the negative electrode active material may be 0.1 µm or more and 100 µm or less.

The negative electrode 203 may include an additional material such as a solid electrolyte. The materials described in Embodiment 1 or 2 can be used as the solid electrolyte.

### EXAMPLES

Hereinafter, the details of the present disclosure will be described using examples and reference example. The present disclosure is not limited to the following examples.

### <Example 1>

### [Production of halide solid electrolyte]

LiF, TiF₄, and AlF₃ being raw material powders were weighed in an argon glove box in which the dew point was -60°C or lower so that the molar ratio would be LiF:TiF₄:AlF₃ = 2.5:0.5:0.5. These were crushed and mixed in a mortar to obtain a mixture. Milling of the mixture was performed using a planetary ball mill at 500 rpm for 12 hours. A powder of a halide solid electrolyte was obtained in this manner as a first solid electrolyte of Example 1. The composition of the halide solid electrolyte of Example 1 was represented by Li_{2.5}Ti_{0.5}Al_{0.5}F₆ (hereinafter referred to as "LTAF").

### [Production of coated active material]

A powder of Li(NiCoAl)O₂ (hereinafter referred to as "NCA") was prepared as a positive electrode active material. Next, a coating layer made of the LTAF was formed on the NCA. The coating layer was formed by compression shear processing using a composite particle forming machine (NOB-MINI, manufactured by HOSOKAWA MICRON CORPORATION). Specifically, the NCA and the LTAF were weighed so that the volume ratio would be 95.4:4.6, and were processed with a blade clearance of 2 mm, at a rotation rate of 6000 rpm, and for a processing time of 50 minutes. A coated active material of Example 1 was obtained in this manner.

### [Measurement of specific surface area]

The specific surface area of the coated active material was measured under the following conditions. An amount of 3 g of the coated active material was put in a test tube for measurement, and the test tube was then connected to a specific surface area and pore size distribution measurement apparatus (BELSORP MAX manufactured by MicrotracBEL Corp.). After that, a nitrogen gas adsorption test was carried out under the following conditions: the adsorption temperature, 77 K; the upper limit of the adsorption relative pressure, 0.99 (P/P0). A straight line section of an adsorption isotherm was analyzed by the BET method using analysis software BELMaster 7 to calculate the specific surface area.

The specific surface area of the coated active material of Example 1 was 0.503 m²/g. The specific surface area of the NCA was also measured by the same method. The specific surface area of the NCA was 0.573 m²/g. A ratio of the specific surface area of the coated active material to the specific surface area of the NCA was 88%.

### [Production of sulfide solid electrolyte]

Li₂S and P₂S₅ being raw material powders were weighed in an argon glove box in which the dew point was -60°C or lower so that the molar ratio would be Li₂S:P₂S₅ = 75:25. These were crushed and mixed in a mortar to obtain a mixture. Subsequently, milling was performed using a planetary ball mill (Type P-7 manufactured by Fritsch GmbH) at 510 rpm for 10 hours. A solid electrolyte in a glass state was obtained in this manner. The solid electrolyte in a glass state was subjected to a thermal treatment in an inert atmosphere at 270°C for 2 hours. Li₂S-P₂S₅ (hereinafter referred to as "LPS") being a solid electrolyte in a glass ceramic state was thereby obtained.

### [Production of positive electrode material]

The coated active material of Example 1 and the LPS were weighed in an argon glove box so that the volume ratio between the NCA and a solid electrolyte would be 70:30 and the volume ratio between the LTAF and the LPS would be 4.8:95.2. These were mixed in an agate mortar to produce a positive electrode material of Example 1. Regarding the volume ratio between the NCA and the solid electrolyte, the volume of the "solid electrolyte" refers to the sum of the volumes of the LTAF and the LPS.

### <Example 2>

A positive electrode material of Example 2 was obtained in the same manner as in Example 1, except that the rotation rate of the composite particle forming machine was changed to 4700 rpm.

### <Reference Example 1>

A positive electrode material of Reference Example 1 was obtained in the same manner as in Example 1, except that the rotation rate of the composite particle forming machine was changed to 2500 rpm.

### [Production of battery]

Each of the positive electrode materials was weighed to include 14 mg of the NCA. The LPS and the positive electrode material were stacked in this order in an insulating outer cylinder. The resulting laminate was then pressed and molded under a pressure of 720 MPa. Subsequently, metal lithium was disposed in contact with the LPS layer, and press-molding was carried out again under a pressure of 40 MPa. A laminate consisting of a positive electrode, a solid electrolyte layer, and a negative electrode was produced in this manner. Next, current collectors made of stainless steel were disposed on the top and the bottom of the laminate. A current collector lead was fixed to each current collector. Then, the inside of the outer cylinder was blocked from the outside atmosphere by sealing the outer cylinder with an insulating ferrule. Through the above steps, batteries according to Example 1, Example 2, and Reference Example 1 were produced. Each battery was fastened with four bolts from the top and the bottom to apply a pressure to the battery at a contact pressure of 150 MPa.

### [Charge-discharge test]

Each battery was disposed in a constant-temperature chamber at 25°C. Constant current charging was performed for the battery at a current value of 147 µA which is 0.05C (20-hour rate) with respect to a theoretical capacity of the battery until the voltage reached 4.3 V. Constant current discharging was then performed for the battery at a current value of 147 µA which is 0.05C until the voltage reached 2.5 V. After that, constant current charging was performed for the battery at a current value of 147 µA which is 0.05C with respect to the theoretical capacity of the battery until the voltage reached 3.06 V. Subsequently, constant current discharging was performed for one second at a current value of 6.76 mA which is 2.3C (1/2.3-hour rate) with respect to the theoretical capacity of the battery, and the voltage was measured. A battery resistance was determined from a straight line between two points, which are an OCV (point 1) before discharging and a voltage (point 2) after the discharging at 6.76 mA for one second, on an I-V plot. This battery resistance was defined as an initial battery resistance R₀.

After that, the temperature inside the constant-temperature chamber was changed to 60°C, and charging and discharging were carried out 50 cycles at a current value of 5.88 mA which is 1C.

The temperature of the constant-temperature chamber was set at 25°C again, and constant current charging was performed for the battery at a current value of 147 µA which is 0.05C with respect to the theoretical capacity of the battery until the voltage reached 3.06 V. Subsequently, constant current discharging was performed for one second at a current value of 6.76 mA which is 2.3C with respect to the theoretical capacity of the battery, and the voltage was measured. A battery resistance was determined from a straight line between two points, which are an OCV (point 1) before discharging and a voltage (point 2) after the discharging at 6.76 mA for one second, on an I-V plot. This battery resistance was defined as a battery resistance R₁ after the charge-discharge cycling.

### [Ratio between resistance increase rates]

A ratio (R₁/R₀) of the battery resistance R₁ after the charge-discharge cycling to the initial battery resistance R₀ were determined for each of Example 1, Example 2, and Reference Example 1. A ratio (100×(R₁/R₀)ₑₓ₁/(R₁/R₀)_{ref}) of the ratio (R₁/R₀)ₑₓ₁ of the battery of Example 1 to the ratio (R₁/R₀)_{ref} of the battery of Reference Example 1 was determined. Likewise, a ratio (100×(R₁/R₀)ₑₓ₂/(R₁/R₀)ref) of the ratio (R₁/R₀)ₑₓ₂ of the battery of Example 2 to the ratio (R₁/R₀)_{ref} of the battery of Reference Example 1 was determined. The values determined are shown in Table 1 as "ratio between resistance increase rates".

**[Table 1]**

| | Rotation rate of composite particle forming machine (rpm) | Specific surface area (m²/g) | Specific surface area of coated active material /Specific surface area of NCA (%) | Ratio between resistance increase rates (%) |
|---|---|---|---|---|
| Example 1 | 6000 | 0.503 | 88 | 85 |
| Example 2 | 4700 | 0.601 | 105 | 88 |
| Reference Example 1 | 2500 | 0.706 | 123 | 100 |

### <Discussion>

As shown in Table 1, the smaller the ratio of the specific surface area of the coated active material to the specific surface area of the active material was, the smaller the ratio between resistance increase rates was. This indicates that the resistance of the battery is able to be reduced by suppressing an oxidation reaction of the sulfide solid electrolyte.

It is inferred that in the case that the ratio of the specific surface area of the coated active material to the specific surface area of the active material is smaller than 123%, an oxidation reaction of the sulfide solid electrolyte is able to be suppressed sufficiently and consequently the resistance increase rate is able to be reduced to a low level. Therefore, the value of the ratio of the specific surface area of the coated active material to the specific surface area of the active material is desirably smaller than 123%. As described above, the lower limit of the ratio of the specific surface area of the coated active material to the specific surface area of the active material is, for example, 46%.

It has been confirmed (for example, in JP 2020-048461 by the present applicant) that in the case of using Ca, Mg, Y, or Zr instead of Al, a halide solid electrolyte has a comparable ionic conductivity. Therefore, a halide solid electrolyte including, instead of Al or along with Al, at least one selected from the group consisting of these elements can be used. A battery including such a halide solid electrolyte can also be charged and discharged, and an effect by which an oxidation reaction of the sulfide solid electrolyte is suppressed and an increase in resistance is reduced can be achieved.

Additionally, oxidation of a sulfide solid electrolyte is caused chiefly by drawing an electron out of the sulfide solid electrolyte in contact with a positive electrode active material. Therefore, by the technique of the present disclosure, the oxidation suppressing effect on sulfide solid electrolytes can be achieved even when an active material other than NCA is used.

### INDUSTRIAL APPLICABILITY

The technique of the present disclosure is useful, for example, for all-solid-state lithium secondary batteries.

## Claims

1. A coated active material comprising:
an active material; and
a coating layer comprising a first solid electrolyte, the coating layer coating at least a portion of a surface of the active material, wherein
the first solid electrolyte comprises Li, Ti, M, and F,
the M is at least one selected from the group consisting of Ca, Mg, Al, Y, and Zr, and
a ratio of a specific surface area of the coated active material to a specific surface area of the active material is smaller than 123%.

2. The coated active material according to claim 1, wherein the active material is a positive electrode active material.

3. The coated active material according to claim 1 or 2, wherein the ratio is 105% or less.

4. The coated active material according to any one of claims 1 to 3, wherein the ratio is 89% or less.

5. The coated active material according to any one of claims 1 to 4, wherein the M is at least one selected from the group consisting of Al and Y

6. The coated active material according to any one of claims 1 to 5, wherein the M is Al.

7. The coated active material according to any one of claims 1 to 6, wherein a ratio of an amount of substance of the Li to a sum of an amount of substance of the Ti and an amount of substance of the M is 1.7 or more and 4.2 or less.

8. The coated active material according to any one of claims 1 to 7, wherein
the first solid electrolyte is represented by the following composition formula (2):
Li_{6-(4-x)b}(Ti₁₋ₓMₓ)_{b}F₆ Formula (2),
where 0 < x < 1 and 0 < b ≤ 1.5 are satisfied.

9. The coated active material according to claim 8, wherein 0.1 ≤ x ≤ 0.9 is satisfied.

10. The coated active material according to claim 8 or 9, wherein 0.8 ≤ b ≤ 1.2 is satisfied.

11. An electrode material comprising:
the coated active material according to any one of claims 1 to 10; and
a second solid electrolyte.

12. The electrode material according to claim 11, wherein the second solid electrolyte comprises a sulfide solid electrolyte.

13. A battery comprising:
a positive electrode comprising the electrode material according to claim 11 or 12;
a negative electrode; and
an electrolyte layer disposed between the positive electrode and the negative electrode.
